# EUROPEAN PATENT APPLICATION

(11) **EP 3 373 654 A1**
(43) Date of publication of application: **12.09.2018**
(21) Application number: 17159841.0
(22) Date of filing: 08.03.2017
(51) Int. Cl.: H04W 48/00

(54) **AUTONOMOUS LEARNING AND GEOGRAPHIC-BASED ENERGY EFFICIENT NETWORK COMMUNICATION**

(71) Applicant: TRAXENS, 13013 Marseille (FR)
(72) Inventor: BECHA, Hanane, 13090 Aix En Provence (FR); FALLAH, Michel, 13400 Aubagne (FR); GIERSKI, Christophe, 13119 Saint Savournin (FR); NANDAGOBAN, Arulnambi, 13008 Marseille (FR)
(74) Representative: Verriest, Philippe

(57) **Abstract**

The aim of this invention it to accelerate the Network selection avoiding performing multiple and/or full band scan to detect all the available networks that offer a data service for a mobile device. More specifically, the mobile device make use of its Preferred Public Land Mobile Network list which is built for a given geographic region based on a processing of its own previous learning and the learning of other mobile devices by a processing platform in order to prioritize the networks. The selection mechanism aims to reduce the time and the energy consumed to attach to a network.

The present invention describes a method to establish a data communication between a mobile device (tracker), having loT mobile device system, and a station terminal.

## Description

### TECHNICAL FIELD OF THE INVENTION

This invention relates to the field of Communication Network Selection. This invention aims to accelerate the mobile network selection in roaming to reduce the amount of energy consumption out of the battery of the mobile device.

### BACKGROUND

In a roaming situation where a mobile device travels out its home network provider coverage area, a significant amount of time and energy is spent in registering to a network which has commercial agreements with its own network provider. The selection of a Public Land Mobile Network (PLMN) is made from a PLMN-access technology combination list in the priority order found in elementary files of the Universal Integrated Circuit Card (UICC) or eUICC. In automatic selection mode in roaming, the mobile device attempts to register to a PLMN with the highest priority. In case of failure, PLMN with lesser priority are considered in decreasing order of priority until registration of a PLMN is successful. The operated controlled PLMN (OP-PLMN) lists are prioritized based on the commercial agreements made between the network operators. Therefore, a mobile device may select to a network based on OP-PLMN list which does not provide the required service or does not meet QoS requirements. Some other issues may appear, such as the cell of the above mentioned PLMN being out of service or not providing the required service due to some problems such as software bug in a base station transceiver. In order to obtain a required service and an acceptable QoS, a mobile device needs to select a PLMN and then to verify the service & QoS requirements before establishing a data communication over the network. If requirements are not met, mobile device should de-register from said PLMN and search another PLMN which will provide the required service(s) with acceptable QoS. The latter step may be energy consuming for a mobile device which travels randomly for example when used for tracking and monitoring containers.

When the mobile device is not able to get attached to any service provider in a given area, the mobile device will scan and prioritize the discovered service providers based on the strongest signal in that location. Such situation may arise when no agreements are in place for a given geographical area or if service providers on the list are out of service.

In regions with a large number of PLMNs (e.g., Asia), a mobile device may have to perform many handovers between PLMN who have agreements with its own network provider to maintain a seamless connection. Location registration information may be lost during automatic selection process of mobile device if the mobile device is powered-down and then powered-up in different areas where available PLMNs may be different. The mobile device will spend comparatively a long time in PLMN registration process to select a PLMN which provides the required service.

In addition, due to limited storage space on UICC (or eUICC profiles), preferred PLMN lists stored on UICC (or eUICC profiles) typically do not cover worldwide roaming. In such case network provider selection via manual selection mode may be performed. However, the manual selection mode does not provide an automatic handover between two different PLMN and also it turns out be time consuming and hence energy consuming.

In summary, communication networks methods are nowadays designed to achieve real time communication. Thus, every communication is treated as a critical matter. Mobile devices are forced to scan and attach to a network until the service is acquired regardless of the duration of the scan in the automatic selection mode. IoT mobile devices are energy constrained and near-real time communications can be sufficient in most cases such that communication can be delayed up to a certain extent to achieve a tradeoff of energy consumption. IoT Mobiles devices are usually out of physical reach such that charging or replacing battery may not be possible. In addition, the Network providers do not guarantee any Service Level Agreements (SLAs) for data service. The Network providers ignore the quality of their roaming agreements until they get the feedback from their customers, if any. It is assumed that the connected objects are ready to make several attempts, if they are not in their home network or equivalent home network to select the right operator. Roaming is considered as an exception for mobile phone devices. However, full band scan and/or multiple scans require a significant amount of energy. This may not a problem for the majority of applications that have either a permanent power source such as in the automotive domain or for devices are mobile but within a limited geographic zone. This tends to be a real challenge for applications making use of travelling IoT mobile devices (e.g. worldwide mobility and frequent border crossings where roaming is the most frequent scenario) having limited source of energy and no physical access to recharge or to replace the batteries.

Therefore, there is a need for an improved method to accelerate network provider selection while in roaming and hence limiting the energy-consumption of the mobile device.

### SUMMARY OF THE INVENTION

The present invention provides a method for controlling data communication between a mobile terminal and a data acquisition-distribution platform comprising the following steps:
- Determining a geographical location of the mobile terminal;
- Obtaining a device preferred/or and forbidden PLMN list from a preferred and/or forbidden PLMN data structure set based on the geographical location;
- Storing and/or updating the device preferred/or and forbidden PLMN list in an operator file system of the mobile terminal.
- Scanning at least one device preferred frequency band to identify a list comprising at least one available communication network;
- Selecting a cellular network among the available communication networks based on the order of the device preferred PLMN list; and/or excluding networks referenced in the forbidden PLMN list;
- Establishing a communication with data acquisition-distribution platform via the selected communication network.

According to one aspect of the invention, preferred and/or forbidden PLMN list for a geographical zone is built using the mobile terminals previous experiences, network coverage information obtained from public cell-id databases and network QoS information received from operators for a faster service acquisition.

Many applications such as tracking and monitoring containers will make use of multiple IoT devices that have a GPS capability and a predefined trip plan composed of some legs of logistics; if any network problem is detected on the above said logistics legs, sharing this information will be useful for the other mobile devices that will visit the same logistics legs. For example, they can avoid registering to problematic PLMN and select PLMN which have higher chances to provide the required service.

The present invention provides a method that allows faster network selection while obtaining the needed data service and therefore lowering the energy cost for the mobile terminal in a roaming situation. The proposed method is to be considered prior to the Mobile Network providers steering preferences based on pure commercial agreements.

According to an embodiment, the method may use only the forbidden PLMN list. According to another embodiment, the method may use only a preferred PLMN list. According to a further embodiment, both preferred and forbidden PLMN lists are used.

Preferred and/or forbidden PLMN data structure set or PF-P-DSL comprises one or more preferred and/or forbidden PLMN data structure.

The preferred and/or forbidden PLMN data structure set may be structured according to multiple zones and comprising a preferred and/or forbidden PLMN data structure for each zone.

Each preferred and/or forbidden PLMN data structure may comprise a list of preferred PLMN and/or a list of forbidden PLMN in association with geographical locations or zone or an ID associated with a geographical zone.

The zone information may comprise one or more geographical coordinates, a zone type and other parameters to perform geo-fencing.

The preferred and/or forbidden PLMN data structure may also comprise at least one frequency band.

In the above said single preferred PLMN data structure extracted from PF-P-DSL, the preferred PLMN list is hereinafter called device preferred PLMN list (DP-PLMN list); the forbidden PLMN list (DF-PLMN list) is hereinafter called device forbidden PLMN list; and the one or more frequency band is hereinafter called device preferred frequency band.

According to an embodiment, the data structure set is a data structure list.

The Preferred PLMN list may comprise a list or sorted list of network identifiers providing an appropriate service.

The forbidden PLMN list may comprise a list of network identifiers which do not provide an appropriate service.

According to the invention, a mobile terminal can be construed as an Internet of Things (IoT) mobile device, i.e. a terminal that is designed for tracking, monitoring and/or controlling an asset. In particular, the mobile terminal may be attached to a travelling asset.

According to the invention a data acquisition -distribution terminal is a platform than can communicate through a wide area network with the mobile terminal to receive network QoS raw data & other user data & other user data, transmit preferred or forbidden PLMN data structure list.. It also communicates with other entities such as a web server which shares public cell-id database and network operators web server etc. The data acquisition -distribution terminal may be a cloud based platform.

According to the invention a cellular network is a wireless communication network providing packet oriented mobile data service.

According to the invention, an operator file system may be a SIM card or a profile of an eSIM of the mobile terminal.

UICC is an Universal Integrated Circuit Card that hosts the SIM which contains the operator profile; eUICC is an Embedded UICC which enables the secure changing of Subscriptions via eSIM that may host multiple profiles. Both UICC and eUICC may be referred hereinafter as SIM card.

According to an aspect of the invention, the step of obtaining a device preferred and/or forbidden PLMN data structure comprises a step of extracting from a preferred-forbidden PLMN data structure set stored in a local memory of the mobile terminal.

The DP-PLMN list and/or the DF-PLMN list may be stored or updated in a SIM card of the mobile terminal.

The above steps are performed only when a mobile device has a need to communicate with data acquisition -distribution platform system via cellular network.

The steps may be performed only once in a particular geographical zone.

Thus, this configuration allows comparing the device preferred PLMN lists of different services provided by different network providers.

According to an embodiment, the method comprises the following step:
- Receiving at least a partial or complete preferred and/or forbidden PLMN data structure list from a data acquisition - distribution terminal platform.

According to an aspect of the invention, the update may be a complete update of the preferred and/or forbidden PLMN data structure list i.e. for all locations.

According to another aspect of the invention, the update may be a partial update of the preferred and/or forbidden PLMN data structure list i.e. for a limited set of locations.

According to an embodiment, The scanning step is performed on frequency channels from device preferred frequency bands defined in relation with the device preferred PLMN data structure for a geographical zone;

To accelerate the process of scanning to find available networks, a set of frequency bands for each geographical zone may be defined in the Device preferred PLMN list data structure.

According to an embodiment, the method comprises the following steps:
- Receiving a trip plan from a station terminal comprising at least one Zone of Interest from a station terminal; and
   wherein the step of receiving an partial, complete or updated preferred and/or forbidden PLMN data structure set (175b) from a data acquisition -distribution terminal platform comprises receiving a device preferred and forbidden PLMN data structure corresponding to said at least one Zone of interest comprised in the trip plan.

According to one aspect of the invention, the trip plan cites the main Zones of Interest (Zols) that the device will go through during its trip. In addition, the device receives and stores in its local memory a preferred and/or forbidden data structure set for those zones of interest. This preferred and/or forbidden data structure set is computed taken into account the different QoS and services parameters data sets collected by multiple devices during their previous trips for that set of Zols. The station terminal will be able to send partial update or a complete update of the data structure. If the terminal memory is large enough, a complete data structure could be downloaded and stored in the terminal's internal or/and external memory

According to an embodiment, the method comprises the following step:
- collecting and/or evaluating network QoS raw data related to the selected communication network;
   Wherein the network QoS raw data contains at least one record comprising:
   i) a communication network identifier corresponding to the selected communication network;
   ii) the geographical location where the communication has been established;
   iii) at least one characteristic in relation with a Quality of Service of said selected communication network
- Sending at least one message to the station terminal comprising the network QoS raw data.

According to an embodiment, the network QoS raw data may contain at least one record comprising a timestamp when the communication has been established and/or a type of radio access technology used.

According to an embodiment, the method comprises the following step:
- collecting and/or evaluating network QoS raw data related to an available communication network;
Wherein the network QoS raw data contains at least one record comprising:
i) one or more communication network identifier corresponding to at least one available communication network found at a geographical location during scanning;
ii) one characteristic in relation with a Quality of Service of other communication network if available in the particular geographical location or zone

According to an embodiment, the method comprise a step of collecting and/or evaluating network QoS raw data related to failed selection of communication network, and Wherein the network QoS raw data contains at least one record comprises one or more communication network identifier with which the selection failed.

According to an embodiment, the at least one available communication network is a network found before the selected communication network in the order of findings.

According to an embodiment the Quality of Service of mobile networks comprises at least one characteristic among characteristics in relation with the network provider selection process such as Received Signal Strength Indication, attach procedure time, Packet protocol data context activation time, signal to noise ratio, carrier to noise ratio and other radio QoS parameters or characteristics in relation with the service Quality of Service such as low throughput, dropped packets, errors, latency, jitter, out-of-order delivery, performance, reliability, usability.

According to an aspect of the invention, the characteristics in relation with the network provider selection process may comprise duration of a scan and attach step.

According to an embodiment, the method comprises the following step:
- Buffering of network QoS raw data; and
   Wherein said step of buffering of network QoS raw data is performed before the step of sending at least one message to the data acquisition -distribution platform comprising the network QoS raw data.

According to an embodiment, the step of sending at least one message to the data acquisition -distribution platform comprising the network QoS raw data is comprised within a step of sending at least one message comprising user data in addition to network evaluation data.

According to an embodiment, the method comprises the following steps:
- Obtaining a connection on a mobile terminal cluster or local area network;
- Sharing of the preferred and/or -forbidden PLMN data structure set with another mobile terminal or with a gateway device to another mobile terminal using a mobile terminal cluster or local area network.

According to an embodiment, the list could be pushed/updated via different medium of communication between the mobile devices privileging those that make use of gateways and low energy radio networks.

According to an embodiment, the method comprises the following step:
- Swapping to an operator profile based on the geographical location or zone and a set of geographical swapping instructions.

According to one aspect of the invention, the method of control comprises a step of prioritizing different network providers for a given geographical area based on the mobile terminals inputs and the station terminal processing. This implies either using a personalized PLMN in classic SIM or swapping between different network providers operator profiles in case of the use of eUICC. The same swapping mechanism applies as well when we have multiple classic SIM cards.

Thus, the processing data collected from different mobile terminal (IoT devices) and combined with other preferences such as the pricing of different services, or to comply with legal aspects - whenever roaming is not allowed beyond a limited time period whenever this applicable.

According to an embodiment, the method comprises the following step:
- Receiving an updated set of geographical swapping instructions from a data acquisition-distribution platform.

According to one aspect of the invention, the modem may to store and return the list of network operators that it found via the automatic scan with the same order of discovery (ranked list). The list of networks operators may not complete since automatic scanning may be used, but the information is valuable for updating a Device preferred PLMN list, for comparing and selecting a new network service provider, or in case where steering agreements have been updated.

The present invention also concerns a method for controlling data acquisition and distribution on a data acquisition-distribution platform between a plurality of mobile terminals via cellular network, low power radio network , satellite communication or combination of plurality of above said communication mediums comprising the following steps:
- Receiving network QoS raw data related to at least a selected or available communication network from said plurality of mobile terminals; wherein the network QoS raw data contain at least one record comprising:
   i) a communication network identifier corresponding to the at least one selected or available communication network;
   ii) the geographical location where the communication has been established;
   iii) at least one characteristic in relation with a Quality of Service of said selected or available communication network;
- processing the QoS raw data and updating or generating a preferred and/or forbidden PLMN data structure set comprising at least preferred and/or forbidden PLMN data structure for at least one geographical location or zone.
- Sending a complete or partial preferred -forbidden PLMN data structure list to at least one mobile terminal.

According to an embodiment, the processing step involves a data mining, machine learning and/or statistical processing method applied on the received network QoS raw data.

According to an embodiment, a partial preferred -forbidden PLMN data structure set is associated to geographical zones that are included in a trip plan of a mobile terminal.

According to an embodiment, the network QoS raw data may contain at least one record comprising a timestamp when the communication has been established and/or a type of radio access technology used

According to an embodiment, each network operator is given a weight based on network QoS parameter for a particular geographical zone.

The network QoS raw data as defined above related to a selected and other communication network is received from a plurality of mobile terminals, fixed or mobile gateways. Data acquisition-distribution platform system may receive network QoS raw data with user data or in a separate step. Data acquisition distribution system may receive the above said network QoS raw data via different way of communication network which include cellular network, low power clustered radio network which includes a fixed or mobile gateway to be connected with data acquisition-distribution platform system. Data acquisition-distribution platform system may receive network coverage and network QoS raw data from open and paid platforms to enrich its database. Data acquisition-distribution platform system also receives network coverage and network QoS raw data from various operators operational from various countries. Data acquisition-distribution platform system may receive network QoS raw data from plurality of mobile and fixed gateways.

Data acquisition-distribution platform system prepares or composes a complete or partial preferred and/or forbidden PLMN data structure list (PF-P-DSL) based on the trip plan relative to the geographical zone that a mobile device will traverse. Data acquisition-distribution platform system forwards the above said composed list to mobile device via plurality of communication medium which includes cellular network, via gateway to mobile terminal etc. If the device memory is large enough, a complete compose list could be downloaded and stored in the device's internal or/and external memory.

According to an embodiment, the method comprises the following steps:
- Generating a set of geographical swapping instructions based on the network evaluation data;
- Sending said set of geographical swapping instructions to at least one mobile terminal.

According to an embodiment, the method comprises the following step:
- receiving network QoS raw data containing at least one record comprising:
   i) one or more communication network identifiers corresponding to one or more available communication networks found at a geographical location during scanning at the geographical location where the scanning has been performed;

And wherein the step of generating a preferred -forbidden PLMN data structure list is also based on the at least one record.

According to an embodiment, the at least one available communication network is a network found before the selected communication network in the order of findings.

### BRIEF DESCRIPTION OF THE DRAWINGS

The foregoing and other purposes, features, aspects and advantages of the invention will become apparent from the following detailed description of embodiments, given by way of illustration and not limitation with reference to the accompanying drawings, in which:
- Figure 1 represents a tracking system;
- figure 2 represents the structure of a mobile terminal;
- figure 3 represents a data acquisition and distribution platform;
- figure 4 represents the structure of a preferred-forbidden PLMN data structure;
- figure 5 illustrates the structure of a QoS raw data record;
- figure 6 illustrates the structure of a PLMN data structure list
- figure 7 illustrates the internal memory storage and SIM card of a mobile terminal;
- figure 8 illustrates a method for controlling data communication on a mobile terminal; and,
- figure 9 represents a method for controlling data acquisition and distribution.

### DETAILED DESCRIPTION OF THE INVENTION ACCORDING TO AN EMBODIMENT SYSTEM FOR TRACKING

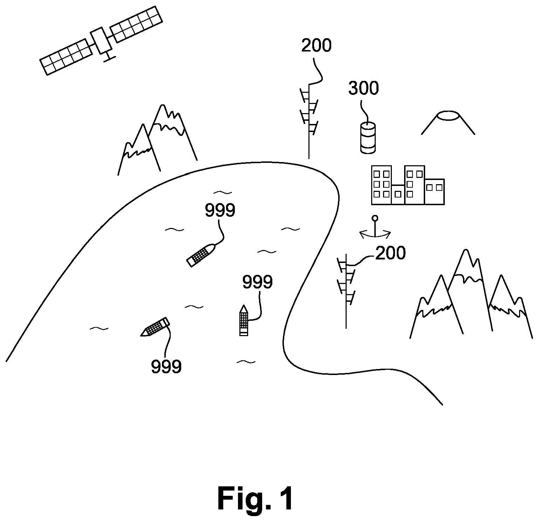

FIG. 1 shows an exemplary use case for a method according to the invention with container ships carrying multiple containers **999.** Each container 999 comprises a mobile device **100,** having a cellular mobile device system **110.**

Mobile device **100** may provide relevant data and services about the position of the container and its different physical aspects being monitored for all transport and logistics chain stakeholders (e.g., the cargo owner, the container owner or leaser, customs and regulatory authorities, etc.). The data collected by mobile device **100** may be beneficial to will increase the whole visibility of transport chain and may enable improving the logistics chain management, simplifying the Reefer monitoring on board of vessels, modernizing the terminals and increasing its efficiency, and enhancing the overall cargo transport security.

In fact, traditional intermodal shipping containers **999** lack visibility of the door-to-door trip progress due to the multitude of means of transportation in use and the involvement of multiple actors including shippers, consignees, and transport companies. Customs and regulatory authorities control processes can be very lengthy. The monitoring of the refrigerated cargo and the inspection of the reefer containers **999** equipment are very costly.

Unlike automotive and other IOT devices, these mobile devices **100** are extremely energy constrained by nature. In addition, these mobile devices **100** once fixed to containers will cross borders travelling worldwide in an unpredictable fashion. The mobile device **100** will be on roaming service most of the time. Data service availability shall be guaranteed worldwide at the least amount of energy consumption.

### MOBILE DEVICE ARCHITECTURE

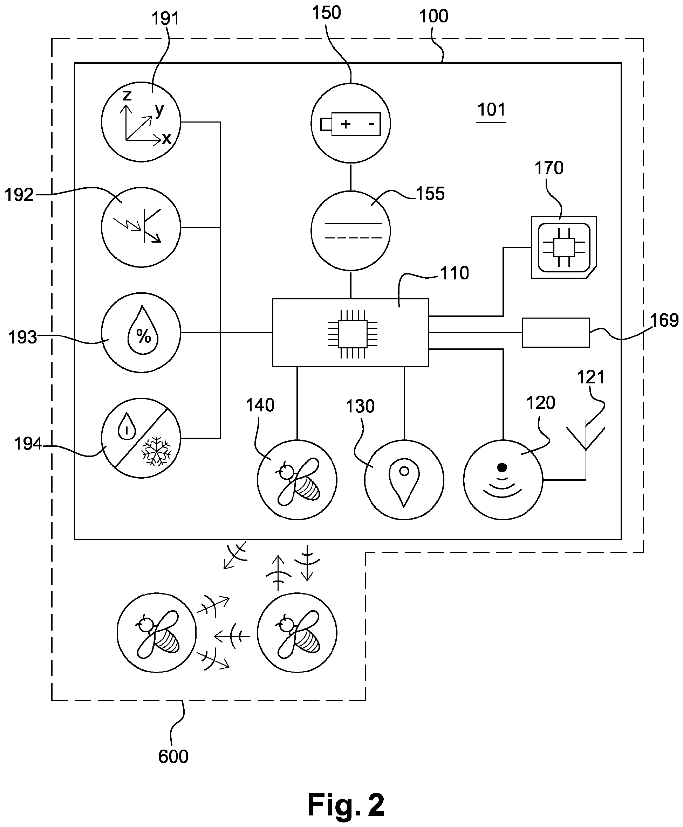

FIG. 2 represents a mobile terminal **100** which may include a mobile terminal system **101** that communicates through a wireless communication network **200.** Mobile terminal system **101** may comprise a controller 110. Typically, controller **110** may comprise a central processing unit that executes operating system software. Mobile terminal system **101** may comprise local memory storage **169** in order to store data.

Controller **110** may be coupled to radio frequency transceiver circuit **120,** transceiver **120** for short and an antenna **121.** Controller **110** may normally control the operation of mobile terminal **100** and the signal processing operations associated with communication functions may be typically performed in transceiver circuit **120.** Transceiver circuit **120** interfaces with antenna **121** in order to receive or transmit information.

Mobile terminal system **101** may comprise an accelerometer sensor **191,** a light sensor **192,** a hydrometer sensor **193** and a temperature sensor **194,** each of them may be coupled to controller **110.** The above mentioned sensors may be internal or external sensors connected through a data or signal connection.

Mobile terminal **100** may send communication signals to and receive communication signals from mobile network **200** via antenna **121.**

A SIM card **170** may be a Universal Integrated Circuit Card (UICC) loaded with a Subscriber Identity Module (SIM) or eUICC. Both UICC and eUICC are referred hereinafter as SIM card. Mobile terminal **100** may operate using at least one SIM card **170** which may be connected to, inserted or soldered in mobile terminal **100** at a SIM card interface (not shown). SIM card **170** may be one type of a removable identity card used to identify a mobile terminal or a container and to personalize the device, among other things. SIM card **170** may store additional user information for the mobile terminal as well, including logbook and for information. In a more generic designation, the SIM or eSIM card may be refered to as an operator file system.

Mobile terminal **100** may communicate in and through wireless communication cellular network **200** providing packet oriented mobile data service. Wireless communication network **200** may be a classical network telecommunications network. In the embodiment of FIG. 1, wireless network **200** may be configured in accordance with cellular radio network technologies of 2^{nd} to 5^{th} generation.

Mobile terminal **100** may include a communication unit **140** comprising an additional transceiver circuit and antenna to communicate on a wireless local area network **600** and in particular with other mobile terminals within a cluster of mobile terminals **100.**

Mobile terminal **100** may include a satellite-based positioning system receiver **130** coupled to controller **110.** The corresponding satellite-based positioning system may be GPS, Galileo or Glonass for example or combination of above said positioning systems.

Mobile terminal **100** may include a modem coupled to controller 110 to communicate with refrigerated containers data logger system.

Mobile terminal **100** may include an autonomous energy capacity or one or more rechargeable or non-rechargeable batteries **150.** We will refer globally to this energy supply as battery **150.** Battery **150** may supply electrical power to electrical circuit in mobile terminal **100.** Battery **150** may be coupled to a power regulator **155** which may regulate power to the device. When mobile terminal **100** is operational, the transceiver circuit **120** may be turned on only when it may be sending to network, and may be otherwise turned off to conserve resources and in particular the autonomous energy capacity **150.** Similarly, a receiver of transceiver circuit **120** may be typically periodically turned off to conserve power until it may be needed to receive signals or information.

In conventional operation, network selection may be performed autonomously by mobile terminal **100** or by mobile terminal **100** instructing the transceiver equipment **120** to select a particular network.

In order to access a mobile data service, mobile terminal **100** first makes its presence known to wireless network **200** by performing what may be known as a packet service data "attach". This operation establishes a logical link with mobile terminal **100** and Serving GPRS support Node. Packet data protocol context activation is done to connect mobile terminal **100** to internet. It makes mobile terminal **100** available to receive and send, voice calls, data, USSD messages or SMS messages. User data may be transferred between mobile terminal **100** and the external data networks using, for example, encapsulation and tunneling.

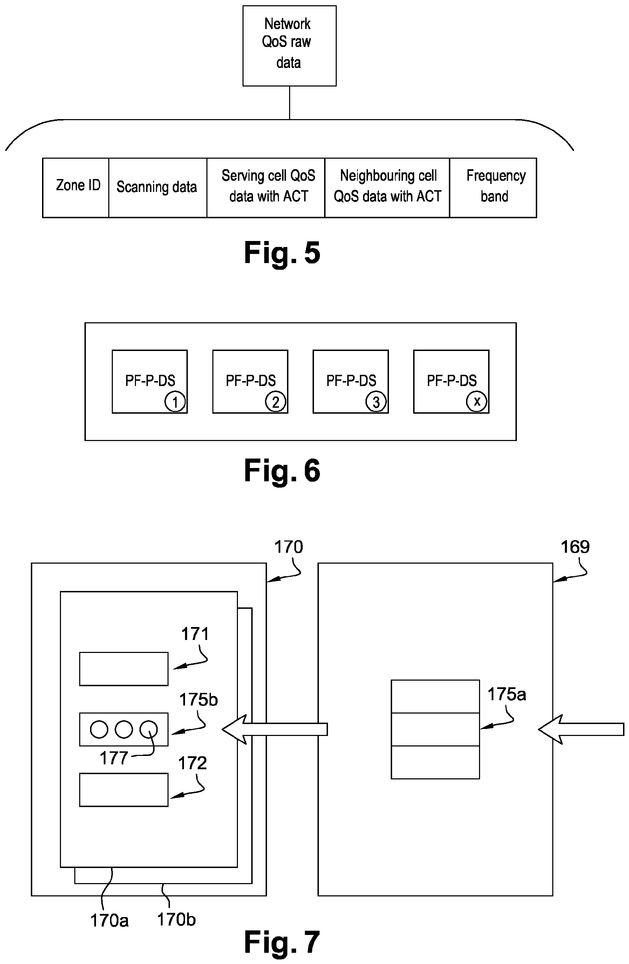

FIG. 7 is an illustration of SIM card **170** of the mobile terminal. SIM card **170** shall include memory storage.

Said memory storage comprises: a list of home network **171,** a User Preferred and/or forbidden PLMN list **175b** and a Network Operator Preferred PLMN list **172.**

According to a standard scan and attach process as described by 3GPP, if the mobile terminal is a roaming situation, the User Preferred PLMN (P-PLMN) list **175b** is considered in priority before the Network Operator Preferred PLMN list **172.**

If the User Preferred PLMN list **175b** is empty or that no Network from the User Preferred PLMN list **175b** could be attached, the Network Operators in the Network Operators PLMN list **172** are considered.

The mobile terminal has to check then whether the attachment to this PLMN is allowed or every time a PLMN is found during a scanning phase. Checking is performed by verifying whether the PLMN is part of the forbidden PLMN list (F - PLMN). Indeed, this verification should be done in each stage of the selection process as specified in 3GPP PLMN selection automatic mode. Hence, before each and every network registration activity, the forbidden PLMN list is consulted.

According to an embodiment, a Device Preferred PLMN list **175b** corresponding to a given geographical location or zone is stored in the SIM card **170** in order to influence the standard scan and attach method. Said list is extracted from a preferred and/or forbidden PLMN data structure list **175a** and stored in the mobile terminal memory storage 169 that can be obtained from a platform **300** as will be described further below.

The invention is compatible with UICC and eUICC that allow storing multiple profiles of different Network providers. In such case, a first operator profile **170a** and a second operator profile **170b** may be present as shown on figure 2.

The mobile terminal described above is capable to determine its geographical position via its geolocation module, as well storing any data in its local memory. It has the right to update User Preferred PLMN (PLMN) List and Forbidden PLMN list. It has the right to force the scanning on particular frequency band. Whenever a mobile terminal **100** initiates a communication with a wireless network **200,** it has to measure and send to a data acquisition-distribution platform system **300** the QoS information of the selected network as well as QoS information of the networks available in the radio environment will be described in detail below.

### DATA ACQUISTION-DISTRIBUTION PLATFORM SYSTEM

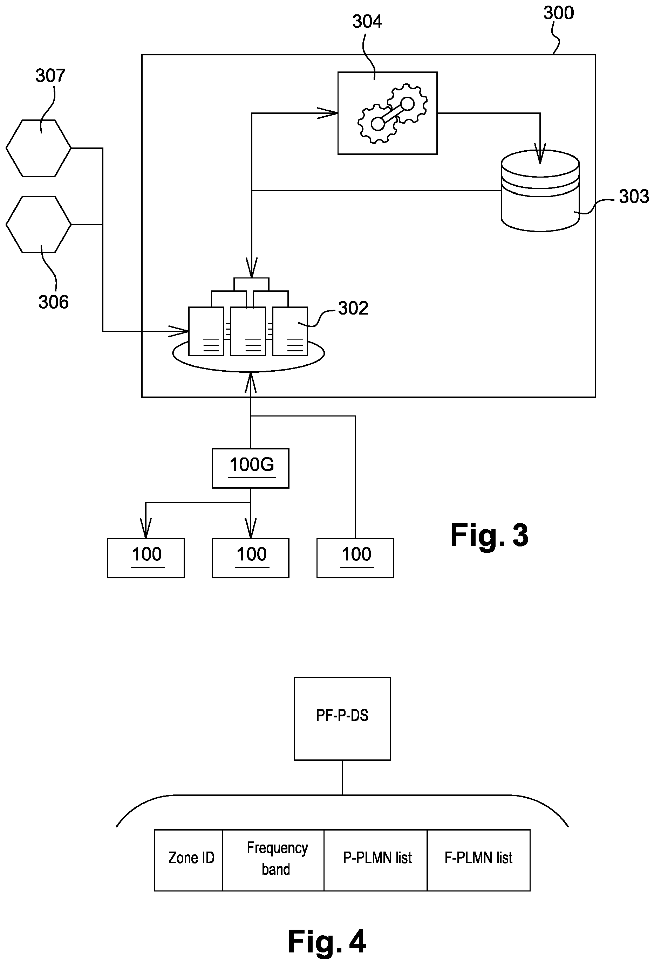

A data acquisition-distribution platform system **300** is represented on figure 3. the data acquisition-distribution platform comprises a system **300** that may be a cloud-based platform.

Data acquisition-distribution platform system **300** may comprise single or multiple instances of acquisition servers building a server interface **302** to allow connection to wireless networks **200** through a wide area network and thereby acquisition of data from terminals **100** or intermediate gateways **100G,** single or gridded processing units **304** and one or more database systems **303** that may be distributed. The system may also comprise 3^{rd} party APIs or Operator APIs to collect data from third parties or operators. This distributed computing system is used to perform generation of preferred-forbidden PLMN data structure list (PF-P-DSL) **175a** as will be described here below.

### METHOD FOR CONTROLLING DATA COMMUNICATION ON A MOBILE TERMINAL

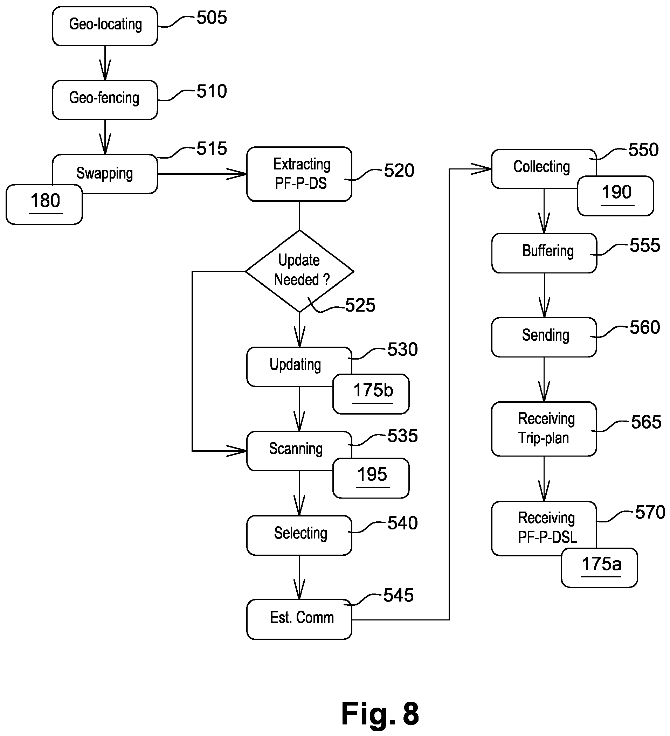

FIG. 8 illustrates a method for controlling **500** a data communication between a mobile terminal **100** at a geographical location and a data acquisition-distribution platform **300.**

In order to prepare a mobile terminal for a data communication, the method may comprise a preliminary step **505** of determination of the geographical location of the mobile terminal **100** and then geo-fencing **510** to identify a geographical zone. This may be performed by the satellite-based positioning system receiver **130.**

The mobile terminal system updates its geo-fence status before every data communication which may or may not include a geo localization step.

Further to step **510,** optionally a step of swapping **515** between different operator profiles **170a, 170b** may be performed based on the geographical location or zone and a set of geographical swapping rules or instructions **180.**

The preferred-forbidden PLMN data structure list PF-P-DSL is stored in memory **169.** Preferred-forbidden PLMN data structure list PF-P-DSL comprises multiple preferred-forbidden PLMN data structure as shown on figure 4.

Each preferred-forbidden PLMN data structure PF-P-DS in PF-P-DSL comprises multiple frequency bands, a list of preferred PLMN, a list of forbidden PLMN, a geographical zone or an ID associated with a geographical zone if mobile terminal already has already obtained said zone information. The zone information comprises one or more geographical coordinates, a zone type and optional other parameters to perform geo-fencing. A single preferred-forbidden PLMN data structure is extracted from the above said preferred-forbidden PLMN data structure list in step **520.** In the above said single PF-P-DS extracted from PF-P-DSL, the preferred PLMN list found in PF-P-DS is hereinafter called device preferred PLMN list or DP_PLMN list; the forbidden PLMN list found in PF-P-DS or DF-PLMN list is hereinafter called device forbidden PLMN list; and the one or more frequency band is hereinafter called device preferred frequency band. In step **525,** the mobile terminal checks if the PLMN list has to be updated. If yes, both DP-PLMN list and DF-PLMN list are stored or updated in the SIM card as shown on fig. 7 in step **530.**

The above steps are performed when a mobile device has a need to communicate with Data acquisition -distribution platform system via cellular network and only once in a particular zone. All the parameters specified in preferred forbidden PLMN data structure list are optional. The DP-PLMN and DF-PLMN list can be empty if no preferences are set yet. Whenever the frequencies are not specified this implies that all the frequencies should be scanned. The above said device preferred frequency band/bands is scanned in step **535** to identify communication network found in the radio environment. The scanning will be performed on all frequency channels from preferred frequency bands as defined in the 3GPP standard.

The use of forbidden PLMN elementary file in SIM is used to avoid a mobile device to exclude a network from Operator preferred PLMN list which does not provide a required service. This step will avoid spending energy of the mobile terminal on unnecessarily registering to the network which is currently out of service or which don't provide a required service.

During the scanning step **535,** a step of collecting **535** network scanning data **195** is performed. Network QoS data from serving and neighboring networks are collected before establishing successful or failed data communication with platform.

The network scanning data, network QoS from serving and neighboring networks are hereinafter called Network QoS raw data.

As shown on FIG. 5, the network QoS raw data contain records may comprise data in relation with:
- a geographical location or zone identifier Zone ID where the communication has been established or a scanning performed;
- Scanning data, i.e scan duration and one or more communication network identifier corresponding to one or more available communication network found before the selected communication network in the order of findings at a geographical location/zone during scanning.
- Serving cell QoS data for the selected network with the type of radio access technology ACT used;
- Neighboring cell QoS data for other available communication network(s) present in the radio environment with the type of radio access technology ACT used;
- The used frequency band.

Other data may be comprised such as a timestamp when the communication has been established.

Network QoS parameters comprises at least one characteristic among characteristics in relation with the network provider selection process such as RSSI which stand for Received Signal Strength Indication, attach procedure time, Packet protocol data context activation time, signal to noise ratio, carrier to noise ratio and other radio QoS parameters or characteristics in relation with the service Quality of Service such as low throughput, dropped packets, errors, latency, jitter, out-of-order delivery, performance, reliability, usability.

During the step **540,** a communication network among other networks is selected and registered according to a network attach procedure based on priority order present in DP-PLMN list and excluding the network present in DF-PLMN list both lists being present in the operator file system or SIM 170.

A data communication is established with platform with the help of selected communication network **200** in step **545.**

Network QoS raw data **190** may be sent in step **560** in messages to the Data acquisition-distribution platform 300 comprising the user data. The network QoS raw data **195** may also be sent at step **560** or in a separate step.

A buffering may occur at step **555** before sending above said data. An aggregation of data is done at step **555** with at least one of network QoS evaluation data **190,** network scanning data **195,** user data and business logic data in order to save resources.

In a step **565** a trip plan may optionally receive from a data acquisition-distribution platform system comprising at least one Zone of Interest. **300.** The trip plan cites the main Zones of Interest (Zols) that the device will go through during its trip.

The method comprises a step of receiving **570** an updated preferred-forbidden PLMN data structure list **175a** from a data acquisition-distribution platform system **300.** An updated set of geographical swapping instructions **180** may also be received from a data acquisition-distribution platform system **300** in step **570** or in a separate step.

The updated device preferred PLMN data structure **175a** may be stored in mobile terminal memory storage **169.**

The update may be a complete update or a partial update. For example, an update could be limited to the Zones of interest comprised in the trip plan as received in step **565.**

According to an embodiment where the mobile terminal is located in a mobile terminal cluster or local area network, the complete or partial PF-P-DSL or DP-PLMN list and DF-PLMN list **175b** may be shared or updated with another mobile terminal or fixed terminal such as gateways.

### METHOD FOR CONTROLLING DATA ACQUISTION AND DISTRIBUTION ON THE DATA ACQUISTION-DISTRIBUTION PLATFORM

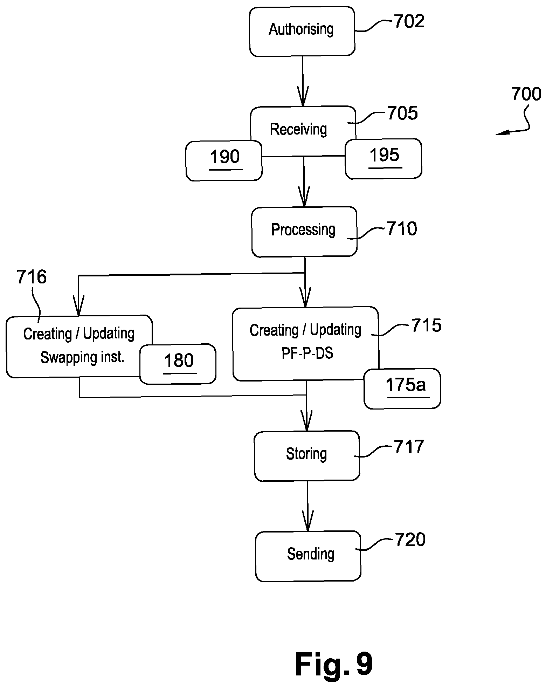

The data acquisition-distribution platform system may implement a method **700** illustrated in FIG.9.

The method comprises a step of receiving **705** network QoS raw data **190** as defined above related to a selected and other communication network **200** from a plurality of mobile terminals, fixed or mobile gateways **100.**

The method may comprise a preliminary step **702** of authorizing the terminals or gateways to send said data.

Data acquisition-distribution platform system may receive network QoS raw data with user data or in a separate step. Data acquisition distribution system may receive the above said network QoS raw data via different way of communication network which include cellular network, low power clustered radio network which includes a fixed or mobile gateway to be connected with data acquisition-distribution platform system. Data acquisition-distribution platform system receives network coverage and network QoS raw data from open and paid platforms to enrich its database. Data acquisition-distribution platform system also receives network coverage and network QoS raw data about various operators operational from various countries. Data acquisition-distribution platform system may receive network QoS raw data from plurality of mobile and fixed gateways.

In step **710,** various processing is performed to generate or update preferred-forbidden PLMN data structure list (PF-P-DSL).

In particular, a Data mining, machine learning and statistical processing methods are applied on the received network QoS raw data from to build a preferred and forbidden PLMN data structure providing a required service for a particular geographical location or zone. The PLMN composition may be an indication of a preference to prioritize network selection based on at least one characteristic in relation with a Quality of Service (QoS) of said mobile networks like communications protocol, low throughput, dropped packets, errors, latency, jitter, out-of-order delivery, performance, reliability, usability, unexpected service loss/denial, amount of time required for Scan, time required to attach to the networks (Circuit and packet switched), data rate i.e. average time to send a given amount of data or bits per seconds , radio access technology, signal strength and coverage. A primary condition to be part of the preferred PLMN list **175b** is the capacity of the networks to deliver data services or a combination data, voice, caller ID services, USSD and other required services to mobile devices. The platform is able to prioritize the networks for a geographical zone based on different combination of QoS parameters. Each network is given a weight based on network QOS parameter for a particular geographical zone.

The geographical zone may be narrowed based on the size of collected QoS information experienced by the devices. For example, a zone may be narrowed if more time is spent by devices in a zone or if more devices are deployed in a zone.

This preferred and forbidden PLMN list could be further tuned by adding contextual information such as network incidents known in advance or any other parameters which has influence or an impact on the ability for the network to provide an appropriate service.

Initially the data structure contains information provided as the operator preferred PLMN. Then, the lists contained in the data structure are sorted based on the experience of the mobile devices. The networks that are discovered first or have higher QoS rating may be moved up in the list. On the contrary, networks facing recurring problems such as service denial, no data service, unacceptable service acquisition time, etc. may be removed from preferred PLMN data structure and added to forbidden PLMN data structure.

The data structure will take into account any change of the agreements made of the network service provider, i.e. adding or removing new agreements with operators /roaming service.

The data structure will be updated any time the platform progresses in the data analysis on the collected networks data.

In step **715,** an updated device preferred and forbidden PLMN data structure **175b** for a given geographical location is generated from the above said step and preferred-forbidden PLMN data structure list (PF-P-DSL) is updated.

Data acquisition-distribution platform system prepares or composes a complete or partial preferred-forbidden PLMN data structure list (PF-P-DSL) based on the trip plan relative to the geographical zones that mobile device will traverse.

In parallel to generation step **715,** a step **716** of generating a set of geographical swapping instructions **180** based on the network QoS raw data may be performed.

Data acquisition-distribution platform system forwards the above said composed list in step **720** to mobile device via plurality of communication medium which includes cellular network, via gateway to mobile terminal etc. Geographical swapping instructions **180** may be sent in the same step or in a different step. If the device memory is large enough, a complete compose list could be downloaded and stored in the device's internal or/and external memory.

## Claims

1. Method for controlling (500) data communication between a mobile terminal (100) and a data acquisition-distribution platform (200) comprising the following steps:
- Determining (505) a geographical location of the mobile terminal (100);
- Obtaining (520) a device preferred/or and forbidden PLMN list from a preferred and/or forbidden PLMN data structure set based on the geographical location;
- Storing and/or updating (530) the device preferred/or and forbidden PLMN list in an operator file system of the mobile terminal.
- Scanning (535) at least one device preferred frequency band to identify a list comprising at least one available communication network (200);
- Selecting (540) a cellular network (200) among the available communication networks (200) based on the order of the device preferred PLMN list (175b); and/or excluding networks referenced in the forbidden PLMN list;
- Establishing (545) a communication with data acquisition-distribution platform via the selected communication network (200).

2. Method according to claim 1 comprising the following step:
- Receiving (570) at least a partial or complete preferred and/or forbidden PLMN data structure list (175b) from a data acquisition -distribution terminal platform (300).

3. Method (500) according to any of claims 1 to 2 wherein:
- The scanning step (535) is performed on frequency channels from device preferred frequency bands defined in relation with the device preferred PLMN data structure for a geographical zone;

4. Method (500) according to any of claims 1 to 3 comprising the following step:
- Receiving (565) a trip plan from a station terminal comprising at least one Zone of Interest from a station terminal (300); and
wherein the step of receiving (570) an partial, complete or updated preferred and/or forbidden PLMN data structure set (175b) from a data acquisition -distribution terminal platform (300) comprises receiving a device preferred and forbidden PLMN data structure (175b) corresponding to said at least one Zone of interest comprised in the trip plan.

5. Method (500) according to any of claims 1 to 4 comprising the following steps:
- collecting and/or evaluating (550) network QoS raw data (190) related to the selected communication network;
Wherein the network QoS raw data contains at least one record comprising:
i) a communication network identifier corresponding to the selected communication network;
ii) the geographical location where the communication has been established;
iii) at least one characteristic in relation with a Quality of Service of said selected communication network
- Sending (560) at least one message to the station terminal (300) comprising the network QoS raw data.

6. Method (500) according to claim 4 or 5 comprising the following steps:
- collecting and/or evaluating (550) network QoS raw data (190) related to an available communication network;
Wherein the network QoS raw data contains at least one record comprising:
i) one or more communication network identifier corresponding to at least one available communication network found at a geographical location during scanning;
ii) one characteristic in relation with a Quality of Service of other communication network if available in the particular geographical location or zone

7. Method (500) according to claim 6, wherein the Quality of Service of mobile networks comprises at least one characteristic among characteristics in relation with the network provider selection process such as Received Signal Strength Indication (RSSI), attach procedure time, Packet protocol data context activation time, signal to noise ratio, carrier to noise ratio and other radio QoS parameters or characteristics in relation with the service Quality of Service such as low throughput, dropped packets, errors, latency, jitter, out-of-order delivery, performance, reliability, usability.

8. Method (500) according to any of claims 1 to 7, comprising the following step:
- Buffering of network QoS raw data (190); and
Wherein said step of buffering of network QoS raw data (190) is performed before the step of sending (560) at least one message to the data acquisition -distribution platform (300) comprising the network QoS raw data (190).

9. Method (500) according to any of claims 1 to 7 wherein the step of sending (560) at least one message to the data acquisition -distribution platform (300) comprising the network QoS raw data is comprised within a step of sending at least one message comprising user data in addition to network evaluation data (190).

10. Method (500) according to any of claims 1 to 9 comprising the following steps :
- Obtaining a connection on a mobile terminal cluster or local area network;
- Sharing of the preferred and/or -forbidden PLMN data structure set (175b) with another mobile terminal or with a gateway device to another mobile terminal using a mobile terminal cluster or local area network.

11. Method (500) according to any of claims 1 to 10 comprising the following step :
- Swapping (515) to an operator profile (170a, 170b) based on the geographical location or zone and a set of geographical swapping instructions (180).

12. Method (500) according to claim 11, comprising the following step:
- Receiving (505) an updated set of geographical swapping instructions (180) from a data acquisition-distribution platform (300).

13. Method for controlling (700) data acquisition and distribution on a data acquisition-distribution platform between a plurality of mobile terminals via cellular network, low power radio network , satellite communication or combination of plurality of above said communication mediums comprising the following steps:
- Receiving (705) network QoS raw data (190) related to at least a selected or available communication network (200) from said plurality of mobile terminals (100); wherein the network QoS raw data contain at least one record comprising:
i) a communication network identifier corresponding to the at least one selected or available communication network;
ii) the geographical location where the communication has been established;
iii) at least one characteristic in relation with a Quality of Service of said selected or available communication network;
- processing (710) the QoS raw data and updating or generating (715) a preferred and/or forbidden PLMN data structure set (PF-P-DSL) comprising at least preferred and/or forbidden PLMN data structure for at least one geographical location or zone.
- Sending (720) a complete or partial preferred -forbidden PLMN data structure list to at least one mobile terminal (100).

14. Method for controlling (700) according to claim 13 comprising the following step:
- Generating a set of geographical swapping instructions (180) based on the network evaluation data;
- Sending (720) said set of geographical swapping instructions (180) to at least one mobile terminal (100).

15. Method for controlling (700) according to any of claims 13 to 14 comprising the following step:
- receiving (705) network QoS raw data (195) containing at least one record comprising:
i) one or more communication network identifiers corresponding to one or more available communication networks found at a geographical location during scanning at the geographical location where the scanning has been performed;
And wherein the step of generating (715) a preferred -forbidden PLMN data structure list (175a) is also based on the at least one record.
